(19)

Europäisches
Patentamt
European
Patent Office
Office européen
des brevets

(11) **EP 2 312 739 B1**

(12) **EUROPEAN PATENT SPECIFICATION**

(45) Date of publication and mention
of the grant of the patent:
**31.07.2013  Bulletin 2013/31**

(51) Int Cl.:
**H02M 7/483** *(2007.01)*

(21) Application number: **09171698.5**

(22) Date of filing: **29.09.2009**

(54) **Optimal pulse width modulation for multi-level inverter systems**

Optimale Pulsbreitenmodulation für einen Mehrlevel-Stromrichter

Modulation de la largeur d'impulsion optimale pour onduleurs multi-niveaux

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**20.04.2011  Bulletin 2011/16**

(73) Proprietor: **WEG S.A.**
**89256900 Jaraguà do Sul SC (BR)**

(72) Inventors:
• **Torri, Paulo Jose**
**89256900 Jaraguà do Sul SC (BR)**
• **Cunha, Gilberto da**
**89255520 Jaraguà do Sul SC (BR)**
• **Boller, Till**
**42105 Wuppertal (DE)**
• **Rathore, Akshay, Kumar, Dr.**
**IL, 60607 Chicago (US)**
• **Holtz, Joachim**
**42119 Wuppertal (DE)**
• **Oikonomou, Nikolaos, Dr.-Ing.**
**5404 Baden-Dättwill (CH)**

(74) Representative: **MERH-IP**
**Matias Erny Reichl Hoffmann**
**Paul-Heyse-Strasse 29**
**80336 München (DE)**

(56) References cited:
• **HOLTZ J ED - INSTITUTE OF ELECTRICAL AND
ELECTRONICS ENGINEERS: "Pulsewidth
modulation-a survey" PROCEEDINGS OF THE
ANNUAL POWER ELECTRONICS SPECIALISTS
CONFERENCE (PESC). TOLEDO, JUNE 29 - JULY
3, 1992; [PROCEEDINGS OF THE ANNUAL
POWER ELECTRONICS SPECIALISTS
CONFERENCE (PESC)], NEW YORK, IEEE, US
LNKD- DOI:10.1109/PESC.1992.254685, vol.
CONF. 23, 29 June 1992 (1992-06-29), pages
11-18, XP010064792 ISBN: 978-0-7803-0695-0**
• **CORDOVA L ET AL: "Hybrid multilevel inverter
drive with synchronous modulation and current
waveform improvement" ELECTRIC MACHINES
AND DRIVES CONFERENCE, 2009. IEMDC '09.
IEEE INTERNATIONAL, IEEE, PISCATAWAY, NJ,
USA, 3 May 2009 (2009-05-03), pages 158-164,
XP031475767 ISBN: 978-1-4244-4251-5**
• **VON BLOH J ET AL: "Optimization of multilevel
voltage source converters for medium-voltage
DC transmission systems" INDUSTRIAL
ELECTRONICS, 2000. ISIE 2000. PROCEEDINGS
OF THE 2000 IEEE INTERNATIONAL SYMPOSIUM
ON DEC. 4-8, 2000, PISCATAWAY, NJ, USA,IEEE,
vol. 2, 4 December 2000 (2000-12-04), pages
488-494, XP010547984 ISBN: 978-0-7803-6606-0**

**(Cont. next page)**

• HOLTZ J ET AL: "Optimal synchronous pulsewidth modulation with a trajectory tracking scheme for high dynamic performance (invertor control)" PROCEEDINGS OF THE ANNUAL APPLIED POWER ELECTRONICS CONFERENCE AND EXHIBITION. (APEC). BOSTON, FEB. 23 - 27, 1992; [PROCEEDINGS OF THE ANNUAL APPLIED POWER ELECTRONICS CONFERENCE AND EXHIBITION. (APEC)], NEW YORK, IEEE, US LNKD- DOI:10.1109/APEC.1992, vol. CONF. 7, 23 February 1992 (1992-02-23), pages 147-154, XP010056952 ISBN: 978-0-7803-0485-7

• HOLTZ J; OIKONOMOU N: "Synchronous Optimal Pulsewidth Modulation and Stator Flux Trajectory Control for Medium-Voltage Drives" IEEE TRANSACTIONS ON INDUSTRY APPLICATIONS, vol. 43, no. 2, April 2007 (2007-04), pages 600-608, XP002576288 ISSN: 0197-2618 DOI: 10.1109/IAS.2005.1518688 ISBN: 978-0-7803-9208-3

**Description**

TECHNICAL FIELD

The present document relates to multi-level inverter systems. In particular, it relates to the control of switching instants of the switching devices of such multi-level inverter systems.

BACKGROUND

Medium voltage AC drives based on voltage source inverters are in increasing demand for various industrial applications. To achieve better efficiency at higher power, the voltage rating rather than the current of the inverter is increased. Multi-level inverters are a preferred choice for medium voltage drive applications. They allow operation at multiple of dc link voltage and reduce the total harmonic distortion as compared with conventional two level inverters. They may be applied to generic multi-phase loads, e.g. for uninterruptible power supplies (UPS).

Space vector modulation (SVM) is a known technique to impose low harmonic content in machine windings while setting the switching frequency around 1 kHz or higher. It is desired, however, to operate medium voltage drives at switching frequencies below 1 kHz in order to minimize the switching losses. Using SVM at low switching frequency leads to unacceptable high harmonic distortion of the machine currents. In the present document a method for obtaining very low switching frequency operation and low harmonic distortion using synchronous optimal modulation is described. This permits a significant reduction of the switching frequency, e.g. down to 20% of the switching frequency used with SVM, without sacrificing on harmonic content.

Holtz, J, "Pulsewidth Modulation - A survey", IEEE, Proceedings of the annual power electronics specialists conference, Toledo, June 29 - July 3, 1992, pages 11-18, provides an overview of pulsewidth modulation techniques.

SUMMARY

According to a first aspect, a method for determining a pulse pattern of a mul- l-ti-level inverter system for a motor drive is described. Typically, three or five level Neutral Point Clamed (NPC) inverters are used. Such inverters typically comprise a set of switching devices providing L levels of output potentials and an output current. The switching devices usually comprise insulated-gate bipolar transistor (IGBT) or integrated gate-commutated thyristor (IGCT) devices.

The pulse pattern typically comprises a set of N switching instants in a quarter of the fundamental period of voltage or current waveform, at which switching of the multi-level inverter system to an adjacent level of output potential occurs. Quarter wave and half-wave symmetries are introduced in order to eliminate even order harmonics. Therefore, in a preferred embodiment the pulse pattern specifies a quarter waveform of the output potentials and thereby defines the complete waveform of the output potential from the pulse pattern.

The method may comprise the step of determining a set of possible pattern structures. Such pattern structures are typically due to the fact that the inverters may be switched to a higher and/or a lower output potential. This provides at least two possibilities at each switching instant (also referred to as switching angle). By consequence, an increasing number of switching instants N typically leads to an increasing number of possible pattern structures. A pattern structure specifies a sequence of output potentials, typically a sequence of N+1 output potentials. In combination with the switching instants, which specify the time instants of the different output potentials of the pattern structure, a pulse pattern is defined.

The method may further comprise the step of setting a set of fundamental frequencies of a waveform of the output current. In case of a motor load, the fundamental frequencies typically define the rotational frequency of the motor field. In combination with the number of switching instants N, an operating point of the inverter is defined in terms of its fundamental voltage. The fundamental voltages may also be expressed by a so called modulation index, which may be normalized between 0 and 1. The fundamental frequency can also be expressed in terms of modulation index by the following relation

$$m = f_1/f_{1R}$$

where $f_{1R}$ is the rated fundamental frequency.

The method may further comprise the step of determining the N switching instants which provide a relative minimum value of an objective function which is associated with the total harmonic distortion of the waveform of the output current. In an embodiment, the objective function represents the total harmonic distortion of the output current of the multi-level inverter system. The objective function may be normalized.

The determining step may be performed for a pattern structure in the set of possible pattern structures and/or for each fundamental frequency from the set of fundamental frequencies. In an embodiment, the determining step is performed for all pattern structures in the set of possible pattern structures. If a pulse pattern is determined for each fundamental frequency from the set of fundamental frequencies a corresponding set of pulse patterns for the set of fundamental frequencies is obtained.

The determining step may make use of an optimization procedure such as a gradient decent method. The determining step may also take into account additional constraints, e.g. that corresponding switching instants from the set of pulse patterns are continuous across the set of fundamental frequencies. In other words, it may be stated that corresponding switching instants from a set of pulse patterns form a curve across the set of fundamental frequencies or modulation index values. These curves should be continuous, wherein continuity may be defined in that the distance of corresponding switching instants of pulse patterns for adjacent fundamental frequencies do not exceed a pre-determined value, e.g. 5 degrees.

The determining step may take into account other additional constraints, such as a certain minimum distance between switching instants within a pulse pattern. This may be beneficial, in order to take into account certain hardware constraints given by the switching devices of the multi-level inverter system.

The method may comprise the further step of setting initial switching instants. This may be beneficial in the case iterative optimization schemes, such as the gradient decent scheme, are used. For such schemes the appropriate selection of initial switching instants may be important, in order to reach a good relative, if possible an absolute, minimum of the objective function. The initial switching instants may be selected from a normal distribution. The initial switching instants for a given fundamental frequency may also be selected as the N switching instants which provide a relative minimum value of the objective function for an adjacent fundamental frequency from the set of fundamental frequencies. In other words, when the pulse pattern for a given fundamental frequency or modulation index is determined, the pulse pattern, which has been determined using the above method for an adjacent fundamental frequency, may be used as the initial switching instants. By using such initialization, the constraint of continuity may be met.

The method may further comprise determining a discontinuity between switching instants of a pulse pattern from the set of pulse patterns for adjacent fundamental frequencies and determining a new pulse pattern comprising new switching instants for at least one of the adjacent fundamental frequencies to eliminate such a discontinuity. This may be done by selecting the switching instants of the pulse pattern for a first of the adjacent fundamental frequencies as initial switching instants and by determining a new pulse pattern for a second of the adjacent fundamental frequencies. The new pulse pattern comprises the new switching instants which provide a relative minimum value of the objective function. By using the above steps of discontinuity detection and re-optimization, the constraint of continuity with regards to corresponding switching instants in a set of pulse patterns may be achieved.

The method may further comprise the step of determining the set of pulse patterns which provide a relative minimum value of the objective function for each possible pattern structure in the set of possible pattern structures. In an embodiment the set of pulse patterns is determined which provides an absolute or near absolute minimum value of the objective function. This will typically lead to a different set of pulse patterns corresponding to each pattern structure. A set of pulse patterns and the associated pattern structure, which provide the minimum value of the objective function may be selected. The relevant value of the objective function may be the cumulated value of the objective function across the set of fundamental frequencies. In other words, the set of pulse patterns and the associated pattern structure may be selected for which the sum of the objective function across the set of fundamental frequencies is smallest.

When the multi-level inverter system is a five-level neutral point clamped inverter with L = 5 comprising two three-level half-bridges, the method may further comprise the step of dividing the waveform of the output potential of the five-level neutral point clamped inverter into two three-level waveforms such that the two three-level half-bridges are equally loaded.

According to another aspect, a multi-level inverter system for a motor drive is described. The multi-level inverter system may comprise a set of switching devices providing L levels of output potentials and an output current. It may further comprise a control unit for setting the switching instants of the set of switching devices. The control unit makes use of a pulse pattern comprising the switching instants which have been determined based on the method outlined in this document. The control unit may also make use of space vector modulation for a lower range of fundamental frequencies or modulation index values.

According to a further aspect, the multi-level inverter system comprises a common mode inductor. Such inverter systems typically have a common dc link or an open winding topology. For such inverter systems, the method may further comprise the step of determining the set of pulse patterns and the associated pattern structure from the set of possible pattern structures which provides the minimum value of the objective function given the constraint that the total volt-seconds that magnetize the common mode inductor do not exceed a predetermined value. By way of example, the method may comprise the above step of determining the set of pulse patterns which provide a relative minimum value of the objective function for each possible pattern structure in the set of possible pattern structures. At least for a subset of the possible pattern structures the total volt-seconds that magnetize the common mode inductor may be determined. The subset of the possible pattern structures may be given by a fraction of the pattern structures which provide the lowest overall minimum values of the objective function. Then, the set of pulse patterns and the associated pattern structure may be selected for which the sum of the objective function across the set of fundamental frequencies is smallest and for which the total volt-seconds value does not exceed a predetermined value. The predetermined value may be proportional to the dc link voltage, e.g. $7U_d/6$ ms. In particular, the predetermined value may be elected as the maximum value that occurs at that range of six-step operation that forms part of the overall modulation range. Typically, it is during six-step operation that the highest volt-seconds values occur.

According to a further aspect, a software program is described which is adapted for execution on a processor and for performing the method outlined in this document, when carried out on a computing device.

According to another aspect, a storage medium is described. The storage medium comprises a software program adapted for execution on a processor and for performing the method outlined in this document when carried out on a computing device.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

The invention is explained below in an exemplary manner with reference to the accompanying drawings, wherein

Fig. 1 illustrates exemplary symmetry conditions imposed on the voltage and/or current waveforms;
Fig. 2 shows an exemplary three-level NPC inverter topology;
Fig. 3 illustrates exemplary multi-level waveforms per quarter wave for N = 5;
Fig. 4a shows an exemplary five-level NPC inverter topology with isolated dc link topology;
Fig. 4b shows an exemplary five-level NPC inverter topology with common dc link topology;
Fig. 5 illustrates exemplary multi-level waveforms per quarter wave for N = 7;
Fig. 6 shows a flowchart for an exemplary optimization procedure for five-level inverter drives;
Fig. 7 illustrates exemplary discontinuities in angles for $N$=9 after optimization at maximum switching frequency = 200 Hz;
Fig. 8 illustrates exemplary angles for $N$=9 after post-optimization at maximum switching frequency = 200 Hz;
Fig. 9 illustrates exemplary distortion factor $d$ for $N$=9 resulting after optimization and post-optimization at maximum switching frequency = 200 Hz;
Fig. 10 illustrates exemplary distortion factor $d$ resulting after post-optimization for the set of structures ($N$=12) not exceeding $d$ = 0.06 at maximum switching frequency = 200 Hz;
Fig. 11 illustrates possible switching patterns/waveforms to divide a five-level potential ($V5L$) into two three-level potentials ($V3L$-1 and $V3L$-2) for N = 7; logic level $l$=1 corresponds to $u_d/2$, $l$=2 to $u_d$;
Fig. 12 shows exemplary modulation techniques adopted with respect to the modulation index range;
Fig. 13 shows exemplary switching angles with respect to modulation index after post-optimization;
Fig. 14 shows experimental results of the three-level potentials ($V3L$-1 and $V3L$-2), the five-level inverter potential ($V5L$) and the machine phase current ($ia$) for $m$=0.78, $N$=5; and
Fig. 15 shows experimental results of the three-level potentials ($V3L$-1 and $V3L$-2), the five-level inverter potential ($V5L$) and the machine phase current ($ia$) for $m$=0.65, $N$=6.

DESCRIPTION OF THE FIGURES

Synchronous optimal pulsewidth modulation may be used for the control of medium voltage drives. It allows a considerable reduction of switching frequency without increasing the distortion. The reduction in switching frequency reduces the switching losses and thus increases the efficiency of the inverter.

In this method, the pulse patterns, i.e. a set of switching instants or angles, are calculated in an off-line procedure assuming steady-state conditions of the multi-level inverter and the motor drive. Typically, the switching frequency of the switching devices in the multi-level inverter is synchronized with the fundamental frequency of the voltage and/or current waveform, i.e. the fundamental frequency of the voltage and/or current waveform output from the multi-level inverter to the motor drive. Hence the pulse number,

$$N = \mathrm{mod}\left(\frac{(L-1)f_{s,\mathrm{max}}}{2f_1}\right), \qquad (1a)$$

i.e. the number of switching angles or switching instants over a quarter cycle of a fundamental period is an integer. The fundamental period corresponds to a complete cycle of the voltage and/or current waveform output from the multi-level inverter to the motor drive. In the above equation $f_{s,max}$ is the maximum switching frequency and $f_1$ is the fundamental frequency of the voltage and/or current waveform. $L$ is the number of logic levels in the multi-level inverter, i.e. $L = 3$ for a three-level inverter and $L = 5$ for a five level inverter etc..

In the described method, the switching angles or switching instants over one fundamental period are optimized for a plurality of steady-state operating points while observing the distortion of the output current of the multi-level inverter.

To generate an optimal pulse pattern comprising a set of $N$ switching instants, the optimum values of switching angles or switching instants are calculated offline, e.g. using computer programming. For this purpose, the following conditions should be satisfied:

1. Harmonic distortion should be minimal.
2. Consecutive switching angles should be sufficiently separated to allow for minimum on times and off times of power semiconductor switches.
3. Continuity of the switching angles within a given modulation index range, i.e. within a given range of the fundamental frequency, for a given pulse number $N$.

The distortion factor $d$ is preferably the normalized total harmonic distortion (THD). The objective function is then given by

$$d = \frac{i_h}{i_{h,six-step}} \rightarrow \min \qquad (1)$$

where

$$i_h = \sqrt{\sum_k i_k^2} = \frac{1}{2\pi f_1 l_\sigma} \sqrt{\sum_k \left(\frac{u_k}{k}\right)^2} \qquad (2)$$

is the harmonic root mean squared (rms) current, $l_\sigma$ is the leakage inductance of the machine, and $i_{h,six-step}$ is the harmonic rms current at six-step operation of the multi-level inverter, i.e.

$$i_{h,six-step} = \frac{1}{\omega_s l_\sigma} \sqrt{\sum_k \left(\frac{u_{k,six-step}}{k}\right)^2} = \frac{0.046}{\omega_s l_\sigma}\frac{2u_d}{\pi}$$

for three - level waveforms and $\qquad (3)$

$$= \frac{0.046}{\omega_s l_\sigma}\frac{4u_d}{\pi}$$

for five-level waveforms. $u_d$ is the dc link voltage and $\quad u_k = \frac{2u_d}{\pi}\frac{1}{k}\sum_{i=1}^{N} s(i)\cos(k\alpha_i) \qquad (4)$

is the amplitude of the $k^{th}$ harmonic voltage component, where $i = 1, 2 \ldots N$. The slopes of the step transitions at switching instants $\alpha_i$ are s$(i) = (-1)^{i+1}$ for three-level waveforms and s$(i) \in (-1,1)$ for five-level waveforms. We have s$(i) = 1$ when switching to a higher potential (positive step transition), and s$(i) = -1$ when switching to a lower potential (negative step transition).

It should be noted that typically the following definition applies : $\omega_s = 2\pi f_1$. The amplitude of the $k^{th}$ harmonic current component is

$$i_k = \frac{2u_d}{\pi} \frac{1}{k^2 \omega_s l_\sigma} \sum_{i=1}^{N} s(i)\cos(k\alpha_i) \quad . \qquad (5)$$

The dynamic losses of the semiconductor devices are typically reduced by restricting the switching frequencyto a maximum switching value $f_s \leq f_{s,max}$.

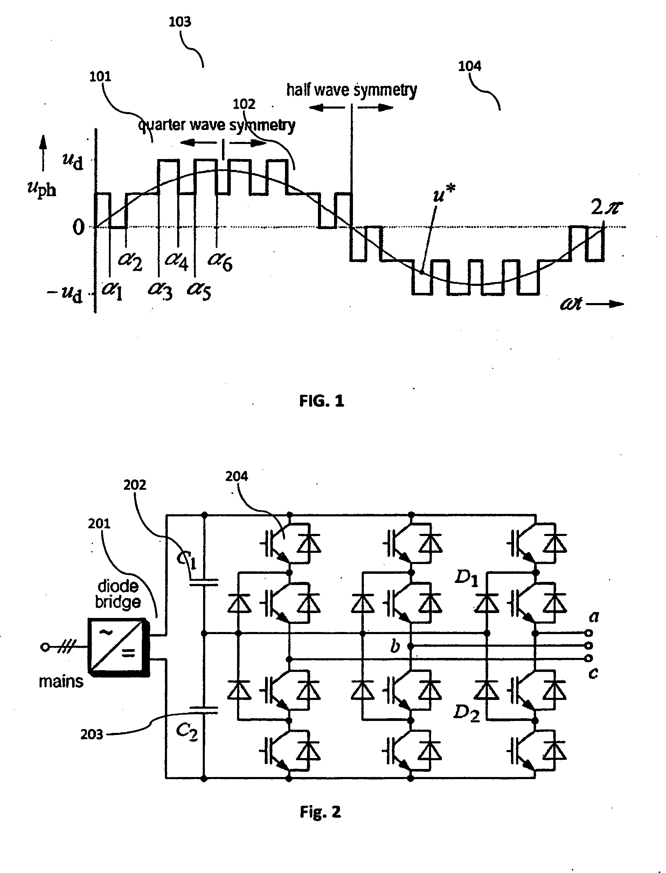

In a preferred embodiment, half-wave and quarter wave symmetries are introduced to the voltage waveforms to eliminate harmonic components of even order. By consequence, only odd order harmonics $k$ = 5, 7, 11, 13, 17, 19, 23 ... remain. Therefore, a calculation over a quarter of the fundamental period is sufficient in order to define the switching angles or switching instants $\alpha_i$, $i$ = 1, 2 ...N. Such a half wave and quarter wave symmetry of the voltage waveform is illustrated in Fig. 1. It can be seen that the first quarter wave segment 101 is symmetrical to the second quarter segment 102. Furthermore, it can be seen that the first half wave segment 103, which comprises the first and second quarter wave segment 101, 102, is point symmetrical to the second half wave segment 104.

By using the symmetry conditions, the angles of a full cycle may be generated after optimization from the determined quarter waveform pulse pattern. The switching angles of the quarter waveform pulse pattern may be calculated such that the normalized distortion of equation (1) is minimized while observing the necessary condition

$$m = \sum_{i=1}^{N} s(i)\cos(k\alpha_i)$$
$$\text{for three - level waveforms and}$$
$$2\,m = \sum_{i=1}^{N} s(i)\cos(k\alpha_i)$$
$$\text{for five - level waveforms.}$$
$$\qquad (7)$$

for five - level waveforms.

where the modulation index

$$m = \frac{u_1}{u_{1,six-step}} \qquad (8)$$

with $u_1$ being the fundamental voltage and $u_{1,six\text{-}step}$ being the fundamental voltage at six-step operation (Six step operation results in a two-level square voltage waveform with amplitude levels equal to $(L\text{-}1)u_d/4$)

$$u_{1,six-step} = \frac{2u_d}{\pi}$$
$$\text{for three - level waveforms and}$$
$$= \frac{4u_d}{\pi}$$
$$\text{for five - level waveforms.}$$
$$\qquad (9)$$

for five - level waveforms.

It should be noted that computation time to calculate the optimal pulse patterns, i.e. the switching angles or switching instants, typically is an important issue in programming. The computation time typically depends upon the selected optimization procedure. An important aspect which also influences the computational complexity is a proper selection of an initialization of the optimization procedure, i.e. notably a selection of initial values of switching angles. A suitable optimization method should be chosen according to the type of objective function. In a preferred embodiment, a gradient method is used for optimization. Using such optimization scheme, switching angles to produce an optimized pulse pattern are calculated, wherein the optimized pulse pattern introduces the least possible distortion factor. It should be noted that depending on the type of optimization procedure used, relative, instead of absolute, minima of the distortion factors are determined.

The switching angles obtained by optimization may exhibit discontinuities (large differences in switching angles for two adjacent modulation index values). Discontinuities will typically cause transients in machine currents whenever the modulation index passes a point of discontinuity. Therefore, such discontinuities of the switching angles across a certain range of the modulation index should be avoided. In a preferred embodiment, the angles are *post-optimized* to establish continuity of angles. Alternatively, the condition of "continuity" of the switching angles could also be taken into account directly within the optimization procedure, e.g. as an additional constraint. Overall, the continuity constraint may involve a little but acceptable compromise in distortion factor *d*.

In the following, the respective waveforms of three-level and five-level NPC inverters are discussed. The optimization of five-level inverter waveforms is more complex owing to an additional degree of freedom when defining the directions of the step transitions.

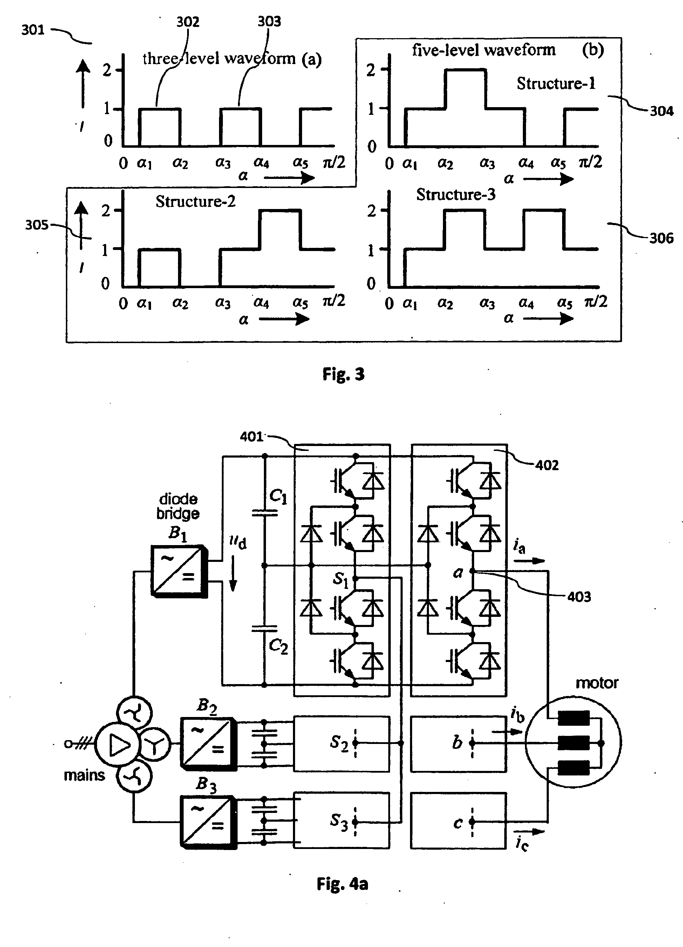

Fig. 2 shows the circuit diagram of a three-level neutral point clamped inverter, i.e. $L = 3$. The dc source 201 of voltage $u_d$, is divided equally into two values by two dc link capacitors 202, 203. The inverter output potentials of the respective phases a, b, c can acquire three discrete levels $+u_d/2$, 0, or $-u_d/2$, depending on the state of the switches 204 in that phase. The phase potential waveform 301 over a quarter period for $N = 5$ is shown in Fig. 3(a). Here, $l$ is the logic level that denotes the inverter output potential such that $l=1$ corresponds to $u_d/2$ and $l=2$ to $u_d$.

Three-level inverter waveforms have a relatively simple structure. The structure is given by pairs of step transitions $s(i) = 1, -1$ (reference signs 302, 303) in the positive fundamental half-wave and $s(i) = -1, 1$ in the negative half-wave (see Fig. 3(a)). The optimization procedure determines the optimum values of switching angles $\alpha_i$ while satisfying the three conditions mentioned above.

Fig. 4a shows the circuit diagram of a five-level neutral point clamped inverter, i.e. $L = 5$, with an isolated dc link topology. It may be derived by series connection of two three-level half-bridges 401, 402 per phase a, b, c. Depending on the switching state of that phase, the inverter output potential 403 per phase can acquire five discrete levels, $-u_d$, $-u_d/2$, 0, $+u_d/2$, or $+u_d$ to which the logic levels $l = -2, -1, 0, 1, 2$ are associated.

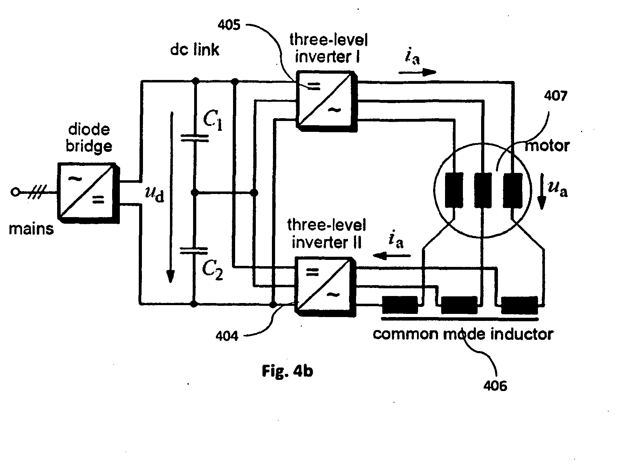

Fig. 4b shows an alternative circuit diagram of a five-level neutral point clamped inverter, which is derived by the series connection of two three-level inverters. This inverter design is based on a common dc link topology, i.e. the two inverters 404, 405 are fed from the same dc link circuit. Their output voltages add at the open phase windings of the motor 407. The inverters are thus series connected. The motor 407 typically exhibits a relatively low impedance for the zero sequence components that are part of the added inverter voltages. A common mode inductor 406 having a relatively high zero sequence impedance and a relatively low impedance for the revolving components is therefore provided to suppress the zero sequence currents.

Both circuit topologies shown in Fig. 4a and Fig. 4b classify as a five level inverter. They can be considered as the dual solutions of an inverter-machine system using series connection as a means to operate the load at increased voltage. The inverter of Fig. 4a has its dc link potentials floating to permit a series connection of the respective inverter phases; the load has a common star point. The topology of the inverter of Fig. 4b has the phase windings of the machine floating, thus permitting a common dc link circuit for the series connected inverters 404, 405.

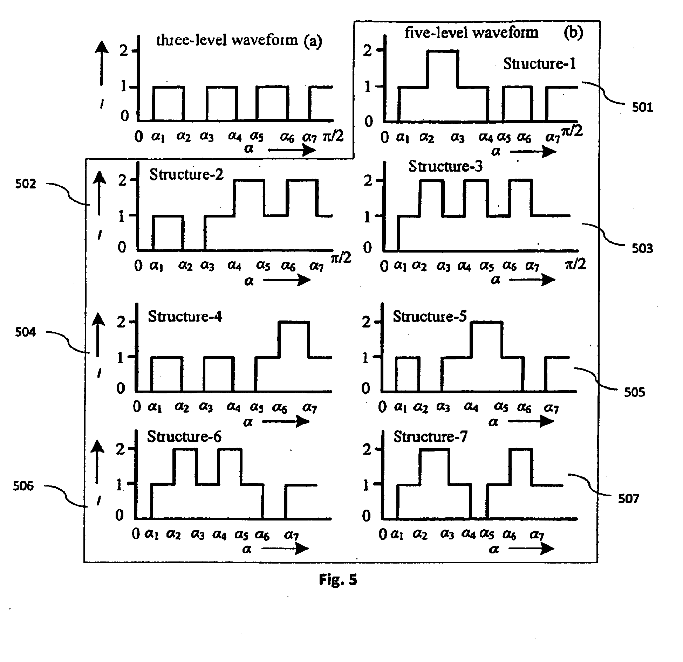

Defining a five-level inverter waveform offers an additional degree of freedom over three-level waveforms. After each logic level $l = 1$, a potential either $l = 2$ or $l = 0$ may be chosen. Similarly after $l = -1$, $l = 0$ or $-2$ can be chosen. Depending on which combination of choices are taken, several possible *'structures'* and therefore, several inverter phase potential waveforms for given values of m and $N$ exist. For example, at $N = 5$, the number $N_{st}$ of inverter output potential waveforms or possible structures is $N_{st} = 3$, as shown in Fig. 3(b) by reference signs 304, 305, 306 over a quarter period. For another example, at $N = 7$, the number $N_{st}$ of inverter output potential waveforms or possible structures is $N_{st} = 7$, as shown in Fig. 5(b) by reference signs 501 to 507 over a quarter period. Overall, it should be noted that different structures produce different values of distortion $d$. The number $N_{st}$ of possible structures increases as the pulse number $N$ increases, e.g. we have $N_{st} = 511$ at $N = 18$.

The optimization of five-level inverter waveforms is typically more complex than the optimization of three-level inverter waveforms owing to an additional degree of freedom in defining the directions of the step transitions at $l = 1$ or $-1$. The optimization determines the optimum values of switching angles $\alpha_i$ while satisfying the three conditions mentioned above. A preferred mechanism of performing optimization in steps is explained below.

In a preferred embodiment, the gradient method is used for optimization. Typically such a gradient method needs the following to be defined: 1) Boundaries within which the solution of the non-linear constrained objective function is to be found i.e. lower and upper bounds of the switching angles; 2) Initial values of variables; 3) the constraints for minimization. Optimization is done in several-steps, which are discussed in detail in the following.

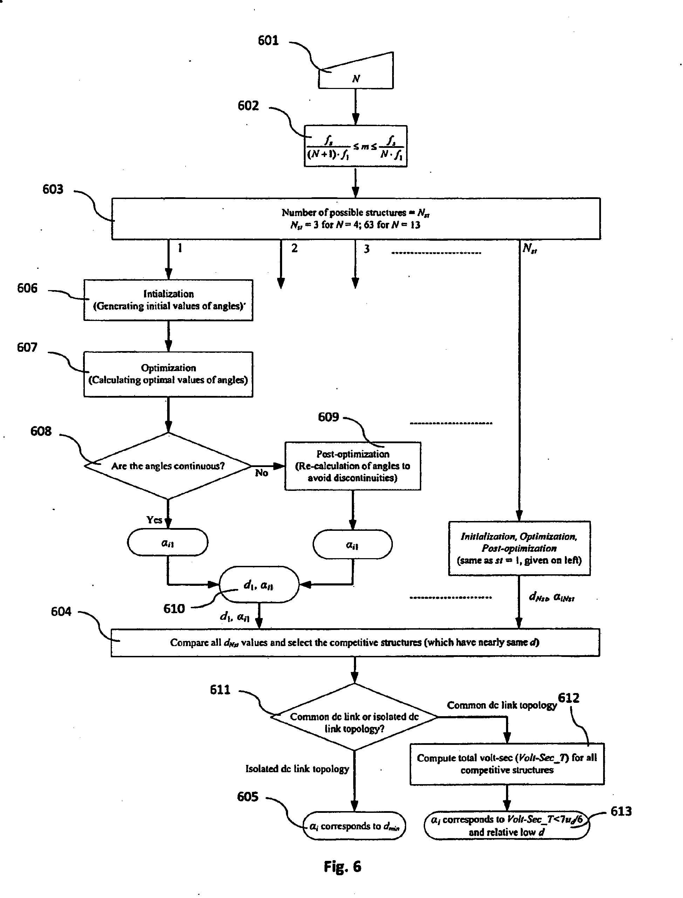

The flow chart of an exemplary optimization process for five level waveforms is shown in Fig. 6. For a given pulse number $N$ (step 601), i.e. for a given number of switching events within a quarter waveform, the related modulation index range is defined such that the switching frequency $f_s$ does not exceed a given limit (step 602). In this range, all possible waveform structures are identified (step 603). The optimization process (steps 606, 607, 608, 609, 610) is carried out for every structure, i.e. for all possible $N_{st}$ structures (as indicated by the arrows 1 to $N_{st}$). The resulting distortion curves are compared (step 604). The optimal pulse pattern for the respective pulse number is selected based on least harmonic distortion, the continuity of angles, and the separation of consecutive angles (step 605). In other words, the optimal pulse pattern is selected based on at least one of: least harmonic distortion, the continuity of angles, and the separation of consecutive angles.

The procedure is executed for a plurality of pulse numbers $N$ (and typically for all its possible structures), in order to cover the entire modulation index range. As already pointed out above, the number of structures $N_{st}$ increases as the pulse number $N$ increases.

In following, certain aspects of the optimization procedure are described in further detail:

(1) *Possible Structures* ($N_{st}$)*:* (step 603) An extra degree of freedom at an instant $l = 1$ to switch up to higher voltage level $l = 2$ or to switch down to a lower voltage level $l = 0$ creates an extra number of structures of the inverter output potential. The number of possible structures depends on the maximum switching frequency $f_s$ and/or the pulse number $N$, which itself is typically a function of the modulation index $m$ or the fundamental frequency $f_1$. For $N = 6$, the number of possible structures is $N_{st} = 7$, for $N = 18$, $N_{st} = 511$. In general, it may be stated that the lower the modulation index $m$, the higher the pulse number $N$, the higher the number $N_{st}$ of possible structures and therefore, the higher the computation time. A higher number of structures requires a higher number of choices to optimize. Eventually, the structure with lowest distortion and/or continuity in the switching angles is selected. Typically, a higher number of structures has the advantage of more choices to be available to optimize and select a better structure.

(2) *Initialization:* (step 606) The initial values of angles are determined in this process. For a pulse number $N$, the range of modulation index $m$ is calculated using

$$\frac{f_{s,\max}}{(N+1) \cdot f_1} \le m \le \frac{f_{s,\max}}{N \cdot f_1} \qquad (10)$$

such that the switching frequency $f_s$, does not exceed its maximum value $f_{s,max}$.

A mutation operator, popular in genetic algorithms, generates angles' values drawn from a normal distribution curve with mean zero and standard deviation equal to one while maintaining equation (7) true.

For this purpose, a "random" function, e.g. the Matlab function "randn", may be used. Angles $\alpha_2$ to $\alpha_N$, with $0 < \alpha_2$ to $\alpha_N < \pi/2$, are repeatedly generated using such "random" function, while $\alpha_1$ is calculated using

$$\alpha_1 = \cos^{-1}\left( 2m - \sum_{i=2}^{N} s(i) \cos(k\alpha_i) \right) \qquad (11)$$

such that the initial set of angles defines a switched waveform of given fundamental content described by the modulation index $m$. In an embodiment, the loop is repeated 25000 times for each steady-state operating point. Switching angles $\alpha_i$ and distortion factor $d$ are recorded in each step. The set of angles that produces the least distortion factor is finally selected. It defines a possible set of initial values of switching angles of the optimization loop that follows next.

Possible initial values for the switching instants or angles $\alpha_1$ to $\alpha_N$ may also be obtained from the optimized switching angles for neighboring modulation index values. This is explained in further detail in the context of "post-optimization" below, but may also be applied directly within the optimization procedure, thereby possibly making "post-optimization" obsolete. However, it should be noted that the selection of appropriate initial values may be important for the determination of (near) absolute minima during the optimization process. It may therefore be preferable to select the initial values according to the random method outlined above, as otherwise the risk of determining local minima during the optimization process may be increased.

(3) *Optimization:* (step 606) The optimization of all possible structures for a pulse number $N$ is preferably done one by one. The gradient method is used to solve the constrained optimization problem. Starting with the initial values previously defined, the gradient method, e.g. the Matlab function "FMINCON", is used to search the nonlinear constrained objective function for its minimum value. The permitted range of angles is $0 < \alpha_i < \pi/2$. In the present example, harmonic components up to the order of 97 are considered.

This process generates for each value of $m$ an optimal set of angles having minimal distortion, achieved as the solution of the given objective function given by equation (1). Certain conditions, solution range, constraints, termination criteria etc. may be defined as follows:

1) Initial values: Taken as the result of the initialization loop
2) Lower bound: LB = 0.
3) Upper bound: UB = $\pi/2$.
4) Minimum difference of two consecutive angles: $\Delta\alpha = 0.038 \, {}^*m$ (equivalent to 100 $\mu$s).
5) Inequalities: $\alpha_2 > \alpha_1 + \Delta\alpha$ ;
$\alpha_3 > \alpha_2 + \Delta\alpha$
and so on.
6) Non-linear constraint:

$$6) \ \ \text{Non-linear constraint: } \alpha_1 = \cos^{-1}\left( 2m - \sum_{i=2}^{N} s(i)\cos(k\alpha_i) \right)$$

to ensure the fundamental content defined by m 7) The loop terminates if $\Delta d < 10^{-15}$.

The optimization process, using a gradient method, calculates the angles and the distortion factor in each step satisfying the above mentioned criteria and conditions. The optimization loop terminates when the difference between two distortion values becomes equal or less than a defined tolerance value, e.g. $\Delta d \leq 10^{-15}$.

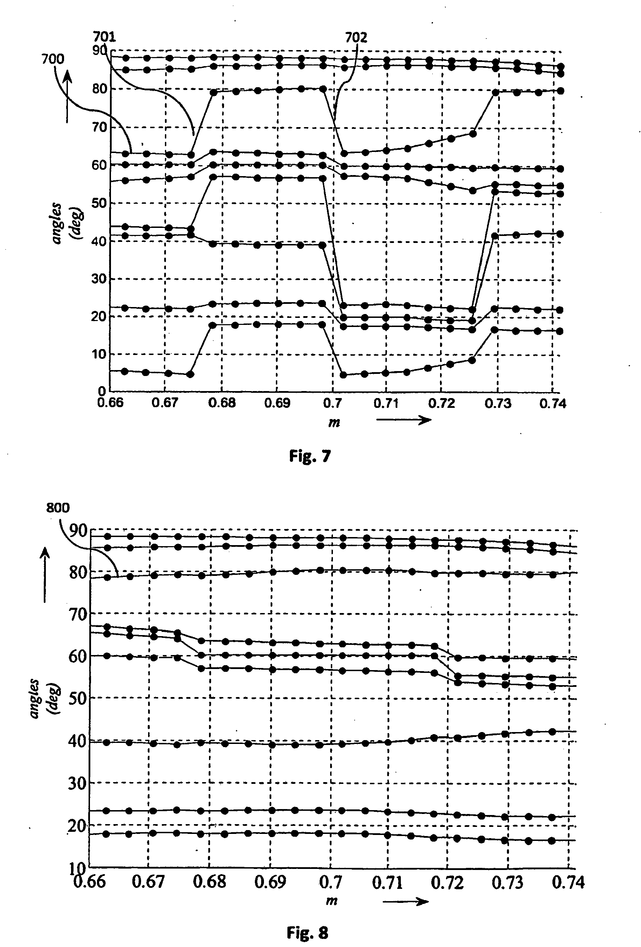

As shown in Fig. 7, discontinuities (see exemplary discontinuities 701, 702 in the set of corresponding switching angles 700) in switching angles can be clearly observed. As already mentioned above, discontinuities result in transients in machine currents whenever the modulation index passes a point of discontinuity. It is therefore desirable to determine switching angles which are continuous over a given range of the modulation index, i.e. over a given range of the fundamental frequency. For this purpose, a post-optimization procedure is described in the following.

(4) *Post-Optimization:* (step 609) The post-optimization loop preferably starts after the optimization for the current pulse number $N$ in its particular modulation index range $m$ is completed. Post-optimization is used if a discontinuity in optimal angles versus modulation index $m$ results from the optimization process for a given pulse number. A discontinuity is defined as a large difference in angles at two adjacent modulation index values. It may be determined, if the difference in corresponding angles at two adjacent modulation index values exceeds a preset value, e.g. $\Delta\alpha_i \leq 5$ degrees, $i = 1, 2, ..., N$.

At first, a check for discontinuities in switching angles for consecutive modulation index values is done over the range associated to $N$ (step 608). If a discontinuity exists in any one of the angles, the post-optimization loop is started. It recalculates the optimal angles starting at the point of discontinuity. In the case of post-optimization, the initial angles' values are taken from the optimal angles just previous to the point of discontinuity. Post-optimizing with the same conditions typically produces continuous angles with some acceptable compromise in $d$.

Fig. 8 shows the angles obtained after post-optimization for the same operating conditions as the angles shown in Fig. 7 for $N = 9$. Continuity in switching angles over its complete modulation index range can be observed. It can be seen that the exemplary set of switching angles 800 which corresponds to the set of switching angles 700 of Fig. 7 has a continuous progression.

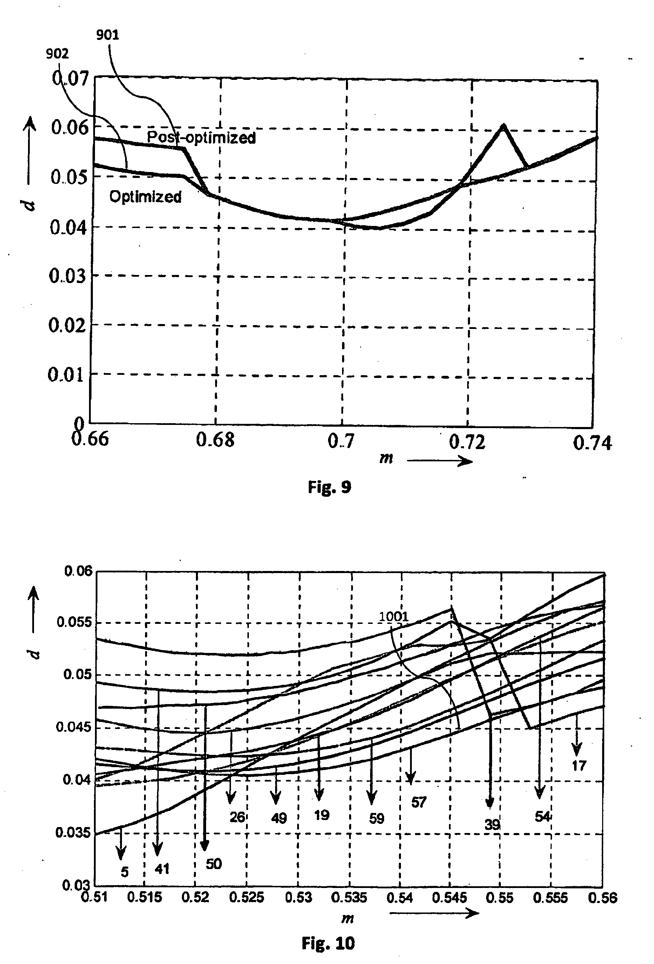

Fig. 9 shows a comparison of distortion factor $d$ resulting from optimization (reference sign 901) and post-optimization (reference sign 902, respectively. There is a minor increase in $d$ which is acceptable.

It has been observed that with an increase in pulse number $N$ (at low values of $m$), the increase in distortion factor $d$ owing to post-optimization is lower. In other words, the increased pulse number typically allows for a continuous set of switching angles over a given range of modulation index values which has a distortion factor closer to the distortion factor achieved by a discontinuous set of switching angles.

As an output of the optimization (step 607) and/or post-optimization (step 609) a relatively minimum value for the distortion factor and an associated set of switching angles is obtained (step 610).

(5) *Comparison of Structures for d, Select Structure with least distortion:* (step 604) Above a method has been described of how to determine a continuous set of switching angles over a given range of modulation index values for a given structure. This optimization method may be performed for all possible structures yielding sets of switching angles and distortion factors. The distortion factor $d$ associated with the different possible structures $N_{st}$ for a pulse number $N$ may be compared. The structure introducing least distortion $d$ and showing continuous angles, preferably not overlapping each other, may be selected for the current values $N$ and associated range of $m.$

For $N$ = 12, the number of possible structures is $N_{st}$ = 63. After post-optimization, the competitive structures with $d \leq 6\%$ are considered for comparison and plotted in Fig. 10. It should be noted that one structure (not shown) is observed to exhibit distortion $d$ > 36%, i.e. significant distortion reduction can be achieved through the optimization procedure outlined in the present document.

The voltage waveform associated with structure 57 (reference sign 1001) is observed with the least overall distortion factor over the given modulation index range (as can be seen from Fig. 10) and continuous angles. Therefore, structure 57 is selected for $N$ = 12. This provides the set of pulse patterns for the given modulation index range (step 605). This method step 605 is typically performed for inverters with isolated dc link topology.

(6) *Division of selected five-level waveform into two three-level waveforms:* A further issue with five-level inverter topology is selecting a *'switching pattern'.* The switching pattern is selected such that the constituent two three-level half-bridges are equally loaded, sharing equal losses, producing symmetrical voltage waveforms and avoiding short voltage spikes/notches.

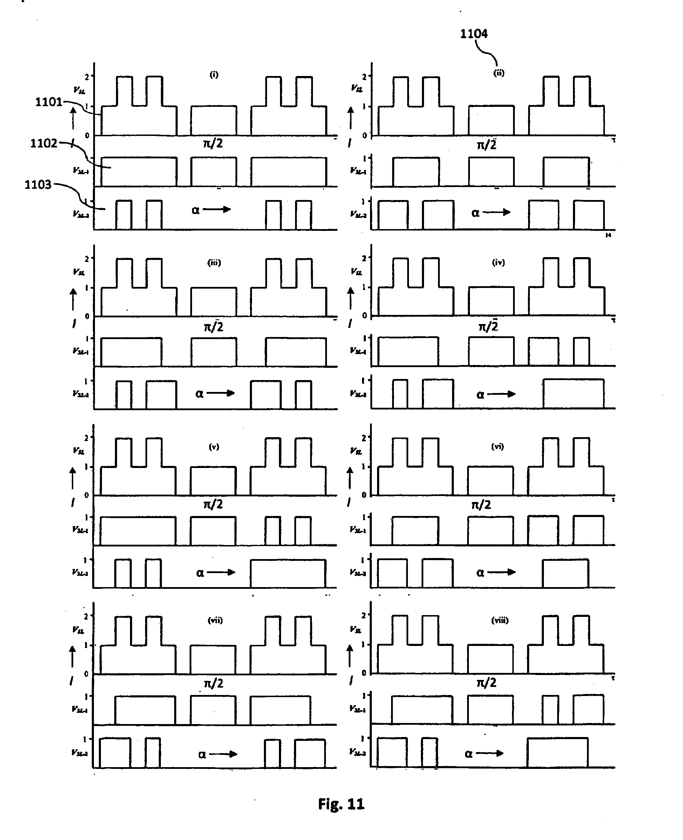

Fig. 11 shows the division of the five-level potential $V5L$ (reference sign 1101) into two three-level potentials $V3L$-1 (reference sign 1102) and $V3L$-2 (reference sign 1103) for $N$ = 7. Eight three-level *patterns* are possible as shown in Fig. 11. Judging based on the above mentioned criteria, the second *switching pattern* (reference sign 1104) is selected.

$N$=7 being an odd pulse number, one three-level half-bridge operates at ($N$-1)/2 and the other at ($N$+1)/2. The switching patterns of the two three-level half-bridges are interchanged, e.g. in the next half cycle or after a full fundamental period, to retain symmetry and sharing equal load and losses.

For even pulse numbers $N,$ the switching losses in two three-level half-bridges are identical. To balance the conduction and switching losses and maintain equal load sharing, the pulse patterns between two three-level half-bridges are swapped, e.g. after every fundamental period. Typcially, no transient will be generated if swapping is being done at time instants at which patterns of both three-level half bridges exhibit identical voltage levels.

(7) *Common dc link topology:* In case of a multi-level inverter with a common dc link topology the selection of the most competitive structure typically requires alternative method steps. This is shown in Fig. 6, where it is checked in step 611 if the multi-level inverter has a common dc link topology as e.g. the five-level NPC inverter shown in Fig. 4b.

As outlined above, the open winding topology typically requires a common mode inductor in the feeding lines to suppress the common mode currents that may develop with this topology. Minimum KVA rating of this inductor may be obtained by minimizing the total volt-seconds ($VoltSecT$) that magnetize the inductor during one half cycle. The value of $VoltSecT$ depends on the respective pulse-pattern or structure.

The minimization of $VoltSecT,$ throughout a given modulation range, disregarding the harmonic distortion, is first used to identify the highest value $VoltSecT,$ i.e. the maximum of minimum $VoltSecT$ that cannot be avoided (step 612). This value determines the KVA rating of the common mode inductor. Typically, it may be stated that if the KVA rating may be reduced, the size, cost and weight of the common mode inductor may also be reduced. Consequently, it is beneficial to reduce the maximum of minimum $VoltSecT,$ i.e. $VoltSecTmax.$ For five-level waveforms it is typically $VoltSecTmax = 7U_d/6$ ms. For physical reasons, the highest value of $VoltSecT$ occurs towards the upper end of the modulation range.

Typcially, both minimum harmonic distortion and minimum $VoltSecT$ cannot be achieved. Since the common mode inductor should anyway be designed to absorb common mode voltages that produce $VoltSecTmax,$ any pattern that produces $VoltSecT < VoltSecTmax$ can be considered optimal. Such pattern is selected from the competitive patterns that come as the result of minimizing the harmonic distortion. The selection may identify the pattern that has the maximum $VoltSecT$ among those that satisfy $VoltSecT < VoltSecTmax$ at minimum harmonic distortion. A good compromise between least harmonic distortion and least $VoltSecT$ is thus achieved, considering the tendency that VoltSecT reduces as the modulation index decreases from its maximum value, i.e. patterns of lower modulation index tend to produce less $VoltSecT$ (step 613). In other words, the total $VoltSecT$ is determined for all possible structures (step 612) and from the structures which meet the condition $VoltSecT < Volt\text{-}SecTmax = 7U_d/6$ ms, the structure with an overall minimum distortion across the considered modulation range is selected (step 613). It can be shown experimentally, that typically this additional constraint on the maximum total volt-seconds of the structures only marginally increases the achievable overall minimum distortion.

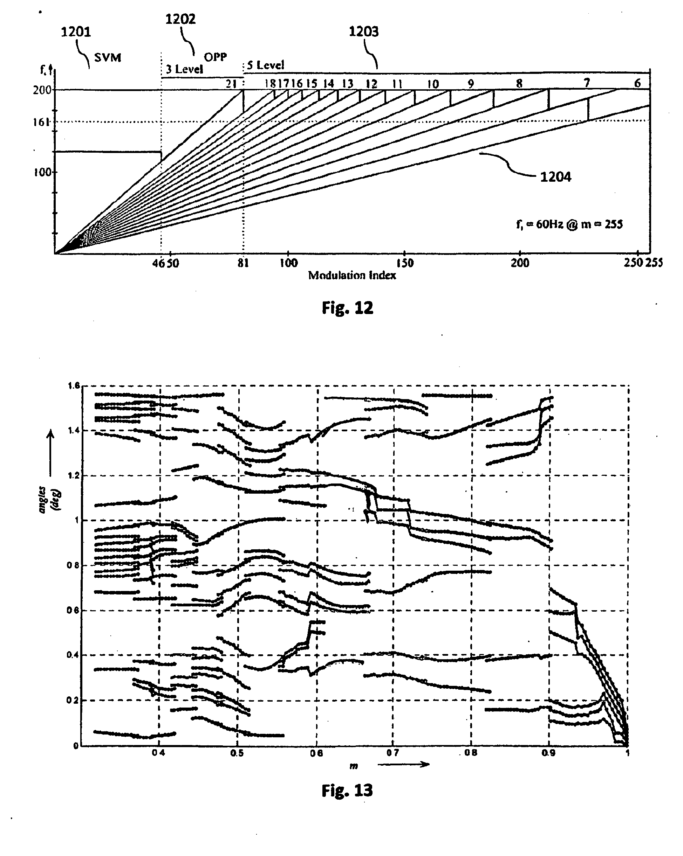

In the following, the overall selection of pulse patterns across the modulation index range $m$ = 0 to 1 is described. In an embodiment, synchronous optimal pulsewidth modulation is adopted for modulation index values above 0.17. For modulation index below 0.17, the number of commutations per fundamental period increases. This makes the implementation complex. Also, the difference in distortion between space vector modulation (SVM) and synchronous optimal control is typically negligible in this range. Therefore, space vector modulation may be adopted for modulation index below 0.17. Fig. 12 shows an example of the modulation techniques used with respect to the modulation index range limiting the maximum switching frequency at 200 Hz. The x-coordinate corresponds to the modulation index value, wherein $m$=1 at the value 255. At this point, the fundamental frequency is $f_1$ = 60Hz.

Modulation index range $m$: 0 to 0.17 (reference sign 1201)

As already mentioned above, for lower values of modulation index, the pulse number N is very high, i.e. the number of switching angles over a fundamental period is increased. This makes an implementation of the above described optimization complex. It has also been observed that the difference in distortion between space vector modulation (SVM) and synchronous optimal control is low in this range. Therefore, space vector modulation may be adopted for this lower modulation index range.

Modulation index range $m$: 0.17 to 0.3176 (reference sign 1202)

The higher number N of pulses at relatively low values of modulation index $m$ results in closer switching angles because logic level $l$ = 2 ($u_d$) appears only for a very short time, causing a short spike in order to hold equation (7) true. In such range of $m$, the performance of five-level operation is nearly equivalent to a three-level operation, due to the fact that a short spike for $l$ = 2 has a negligible effect. On the other hand, the number of possible structures increases and computation time for optimization is considerably higher at five-level operation. Therefore, only three-level operation is preferred for such lower range of m following one unique and simple three-level structure, called three-level operation of five-level inverter. The inverter output phase potentials have a three-level waveform and/or structure. It was observed to achieve better performance (current trajectories) at N = 21 than N = 19 or 20 in this range. Thefore, N = 21 is preferably used in this operation.

Modulation index range $m$: 0.3176 to 1 (reference sign 1203)

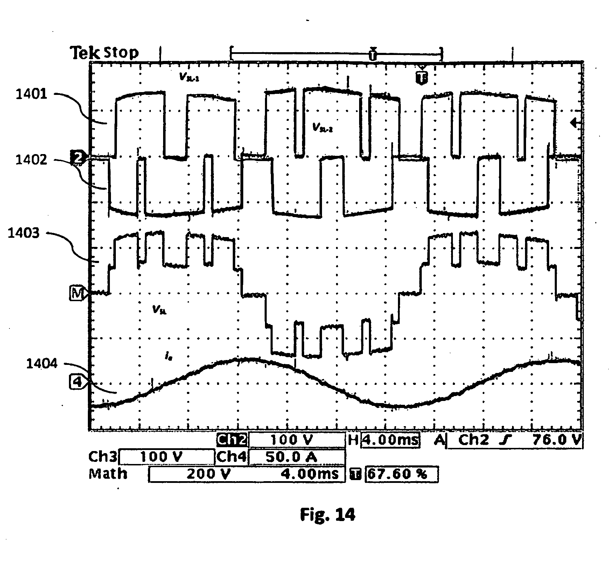

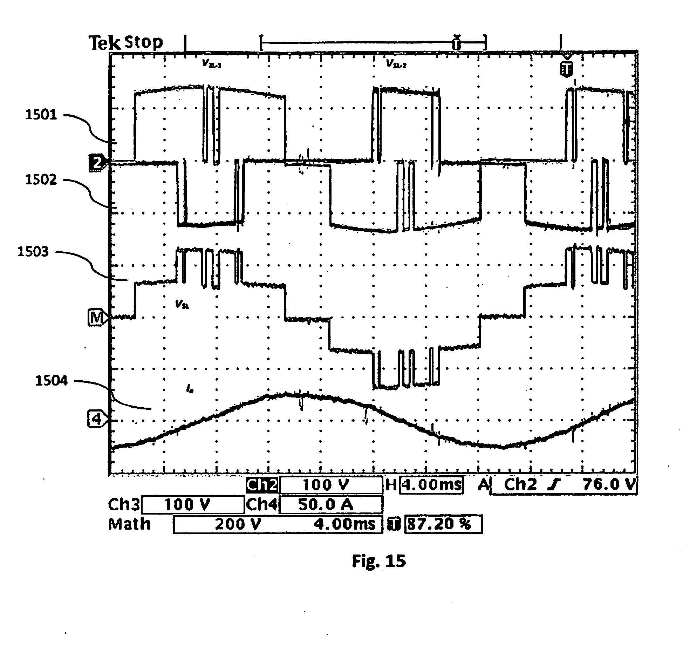

In this range optimal pulse width modulation using five-levels may be used. Fig. 13 shows the switching angles with respect to modulation index. The pulse number varies from $N$ = 6 to 18 over the modulation index range. The switching angles (of every pulse number) maintain continuity as a result of post-optimization. There are minor discontinuity at $N$ = 6, 7, 9 and 11, but they are also within a specified limit of 5 degrees. So throughout the modulation index range switching angles are continuous ($\Delta\alpha$ < 5°).
It should be noted that the lines 1204 result from the relation N=($L$-1)$f_{s,max}$/2$f_1$ in equation (1a) provided above, i.e. for a given pulse number $N$ the switching frequency $f_s$ and the fundamental frequency $f_1$ are proportional, as shown by lines 1204 in Fig. 12.
In the following, experimental results of the optimal pulse width modulation method are described. Synchronous optimal control of induction motor drive was tested using a five-level NPC inverter. The maximum permitted switching frequency was 100 Hz. The optimal switching angles calculated using computer programming were stored in a microcontroller. The switching states (on/off) of the switches were programmed. The actual switching states depend upon the selected *switching pattern* (five-level voltage into two three-level voltages) for a selected five-level structure.
The experimental results are shown in Figs. 14 and 15 for $m$=0.78, $N$=5 and for $m$=0.65, $N$=6 respectively. The phase potentials of the two three-level half-bridges ($V_{3L-1}$ 1401, 1501 and $V_{3L-2}$ 1402, 1502), the phase potential of the five-level inverter ($V_{5L}$ 1403, 1503) and the machine phase current ($i_a$ 1404, 1504) are shown.
The pulse number $N$ is the total number of pulses in two three-level half-bridges in a half cycle. In Fig. 14, potential $V_{3L-1}$ 1401 has 2 pulses and potential $V_{3L-2}$ 1402 has 3 pulses, therefore the pulse number for the five level inverter is $N$=5. The same holds true for Fig. 15 with N = 6, where $V_{3L-1}$ 1501 and $V_{3L-2}$ 1502 carry three pulses.
Fig. 14 and 15 illustrate that the two different pulse sequences (1401, 1402 and 1501, 1502 are interchanged between the two three-level half-bridges after one fundamental period. It is typically important to balance the losses and maintain equal load sharing.
Despite the low switching frequency, the experimental results show low distortion as a result of optimized pulse pattern control using synchronous optimal pulsewidth modulation. The three-level phase potentials $V_{3L-1}$ 1401, 1501 and $V_{3L-2}$ 1402, 1502 constitute the five-level phase potential $V_{5L}$ 1403, 1503, respectively.
In the present document, a new method for optimal pulsewidth modulation has been described. Employing synchronous optimal pulsewidth modulation for the control of medium voltage inverters reduces the harmonic content of the generated waveforms. It enables operation at very low switching frequency. This reduces the switching losses that contribute a major portion of the total losses of medium voltage power semiconductor devices. Reducing the switching losses permits increasing the output power of a given inverter.

Other than three-level waveforms, which are inherently unique, the generation of optimum multi-level waveforms is a process of high complexity. This is owed to the existence of a large number of different waveform structures. A method has been described to find the optimal pulse patterns of all possible structures. This method has been explained and described in detail for five-level waveforms. It should be noted, however, that the method can be equally applied to other multi-level waveforms.

It has been further outlined that the particular structure that has minimum harmonic distortion is identified. Furthermore, the resulting optimal pulse pattern is post-optimized to eliminate the usually large number of discontinuities in switching angle values that occur at varying modulation index. The procedure is described with reference to five-level waveforms, but can be applied to other multi-level waveforms. The high quality of synchronous optimal modulation is demonstrated by measurements taken from a five-level inverter fed induction motor drive.

**Claims**

1. A method for determining a pulse pattern of a multi-level inverter system (404, 405) for a motor drive (407), wherein

   - the multi-level inverter system (404, 405) comprises a set of switching devices (401, 402) providing L levels of output potentials and an output current;
   - the pulse pattern comprises a set of N switching instants, at which switching of the multi-level inverter system (404, 405) to an adjacent level of output potential occurs;

   the method comprising:

   - determining a set of possible pattern structures (501,..., 507);
   - setting a set of fundamental frequencies of a waveform of the output current; and
   - for a pattern structure (501) in the set of possible pattern structures (501,..., 507) and for each fundamental frequency from the set of fundamental frequencies, determining (607) the N switching instants which provide a relative minimum value of an objective function which is associated with the total harmonic distortion of the waveform of the output current, while taking into account the additional constraint that a distance of corresponding switching instants (700) from the set of pulse patterns for adjacent fundamental frequencies from the set of fundamental frequencies does not exceed a pre-determined value, thereby yielding a set of pulse patterns for the set of fundamental frequencies.

2. The method of claim 1, further comprising setting initial switching instants (606) and wherein the step of setting initial switching instants comprises

   - selecting the initial switching instants for a given fundamental frequency as the N switching instants which provide a relative minimum value of the objective function for an adjacent fundamental frequency from the set of fundamental frequencies.

3. The method of any previous claim, wherein

   - the pulse pattern defines a quarter waveform (101) of the output potentials; and
   - quarter wave symmetry and half wave symmetry of the waveform (103, 104) of the output potentials is introduced.

4. The method of any previous claim , further comprising the steps of

   - determining (608) a discontinuity between corresponding switching instants of pulse patterns from the set of pulse patterns for adjacent fundamental frequencies; and
   - determining (609) a new pulse pattern comprising new switching instants for at least one of the adjacent fundamental frequencies.

5. The method of claim 4, wherein the step of determining (608) a discontinuity comprises determining if the distance between corresponding switching instants of optimized pulse patterns for adjacent fundamental frequencies exceeds the pre-determined value.

6. The method of claims 4 to 5, wherein the step of determining (609) a new pulse pattern comprises

    - selecting the switching instants of the pulse pattern for a first of the adjacent fundamental frequencies as initial switching instants; and
    - determining a new pulse pattern for a second of the adjacent fundamental frequencies comprising new switching instants which provide a relative minimum value of the objective function.

7. The method of any previous claim, further comprising the steps of

    - determining the set of pulse patterns which provides a relative minimum value of the objective function for each pattern structure in the set of possible pattern structures (501, ..., 507); and
    - selecting the set of pulse patterns and their associated pattern structure which provides the minimum value of the objective function.

8. The method of any previous claim, wherein the multi-level inverter system (404, 405) is a five-level neutral point clamped inverter with L = 5 comprising two three-level half-bridges; the method further comprising the step of

    - dividing the waveform of the output potential of the five-level neutral point clamped inverter into two three-level waveforms such that the two three-level half-bridges are equally loaded.

9. The method of any of claims 1 to 6, wherein the multi-level inverter system (404, 405) comprises a common mode inductor (406); the method further comprising the step of

    - determining the set of pulse patterns and the associated pattern structure from the set of possible pattern structures (501, ..., 507) which provides the minimum value of the objective function given the constraint that the total volt-seconds that magnetize the common mode inductor (406) do not exceed a predetermined total volt-seconds value.

10. A multi-level inverter system (404, 405) for a motor drive (407) comprising

    - a set of switching devices (401, 402) providing L levels of output potentials and an output current; and
    - a control unit for setting the switching instants of the set of switching devices (401, 402);

wherein a pulse pattern comprising the switching instants is determined based on the method according to any one of claims 1 to 9.

11. The multi-level inverter system (404, 405) of claim 10, wherein the control unit uses space vector modulation for a lower range of fundamental frequencies.

12. A software program adapted for execution on a processor and for performing the method steps of any one of claims 1 to 9 when carried out on a computing device.

13. A storage medium comprising a software program adapted for execution on a processor and for performing the method steps of any one of claims 1 to 9 when carried out on a computing device.

**Patentansprüche**

1. Ein Verfahren zum Bestimmen eines Pulsmusters eines Mehrfach-Pegel-Wechselrichter-Systems (404, 405) für einen Motorantrieb (407), wobei

    - das Mehrfach-Pegel-Wechselrichter-System (404, 405) einen Satz von Schaltvorrichtungen (401, 402) aufweist, die L Pegel von Ausgangspotentialen und einen Ausgangsstrom vorsehen;
    - das Pulsmuster einen Satz von N Umschaltmomenten aufweist, an denen ein Umschalten des Mehrfach-Pegel-Wechselrichter-Systems (404, 405) zu einem angrenzenden Pegel von Ausgangspotentialen stattfindet;

wobei das Verfahren aufweist:

- Bestimmen eines Satzes von möglichen Musterstrukturen (501, ..., 507);
- Setzen eines Satzes von Grundfrequenzen einer Wellenform des Ausgangsstroms; und
- für eine Musterstruktur (501) in dem Satz von möglichen Musterstrukturen (501, ..., 507) und für jede Grundfrequenz aus dem Satz von Grundfrequenzen, Bestimmen (607) der N Umschaltmomente, die einen relativen Minimumwert einer Zielfunktion vorsehen, die mit der gesamten harmonischen Verzerrung der Wellenform des Ausgangsstroms assoziiert ist, unter Berücksichtigung der zusätzlichen Einschränkung, dass eine Distanz von entsprechenden Umschaltmomenten (700) aus dem Satz von Pulsmustern für angrenzende Grundfrequenzen aus dem Satz von Grundfrequenzen nicht einen vorgegebenen Wert übersteigt, wodurch ein Satz von Pulsmustern für den Satz von Grundfrequenzen gewonnen wird.

2. Das Verfahren gemäß Anspruch 1, das weiter aufweist ein Setzen von anfänglichen Umschaltmomenten (606), und wobei der Schritt eines Setzens von anfänglichen Umschaltmomenten aufweist

- Auswählen der anfänglichen Umschaltmomente für eine gegebene Grundfrequenz als die N Umschaltmomente, die einen relativen Minimumwert der Zielfunktion für eine angrenzende Grundfrequenz aus dem Satz von Grundfrequenzen vorsehen.

3. Das Verfahren gemäß einem vorhergehenden Anspruch, wobei

- das Pulsmuster eine Viertelwellenform (101) der Ausgangspotentiale definiert; und
- eine Viertelwelle-Symmetrie und eine Halbwelle-Symmetrie der Wellenform (103, 104) der Ausgangspotentiale eingeführt werden.

4. Das Verfahren gemäß einem vorhergehenden Anspruch, das weiter die Schritte aufweist

- Bestimmen (608) einer Diskontinuität zwischen entsprechenden Umschaltmomenten von Pulsmustern aus dem Satz von Pulsmustern für angrenzende Grundfrequenzen; und
- Bestimmen (609) eines neuen Pulsmusters, das neue Umschaltmomente für zumindest eine der angrenzenden Grundfrequenzen aufweist.

5. Das Verfahren gemäß Anspruch 4, wobei der Schritt des Bestimmens (608) einer Diskontinuität aufweist ein Bestimmen, ob die Distanz zwischen entsprechenden Umschaltmomenten von optimierten Pulsmustern für angrenzende Grundfrequenzen den vorgegebenen Wert übersteigt.

6. Das Verfahren gemäß den Ansprüchen 4 bis 5, wobei der Schritt des Bestimmens (609) eines neuen Pulsmusters aufweist

- Auswählen der Umschaltmomente des Pulsmusters für eine erste der angrenzenden Grundfrequenzen als anfängliche Umschaltmomente; und
- Bestimmen eines neuen Pulsmusters für eine zweite der angrenzenden Grundfrequenzen, das neue Umschaltmomente aufweist, die einen relativen Minimumwert der Zielfunktion vorsehen.

7. Das Verfahren gemäß einem vorhergehenden Anspruch, das weiter die Schritte aufweist

- Bestimmen des Satzes von Pulsmustern, der einen relativen Minimumwert der Zielfunktion für jede Musterstruktur in dem Satz von möglichen Musterstrukturen (501, ..., 507) vorsieht; und
- Auswählen des Satzes von Pulsmustern und seine zugehörige Musterstruktur, die den Minimumwert der Zielfunktion vorsieht.

8. Das Verfahren gemäß einem vorhergehenden Anspruch, wobei das Mehrfach-Pegel-Wechselrichter-System (404, 405) ein Fünf-Pegel-NPC(neutral point clamped)-Wechselrichter mit L = 5 ist, der zwei Drei-Pegel-Halbbrücken aufweist; wobei das Verfahren weiter den Schritt aufweist

- Teilen der Wellenform des Ausgangspotentials des Fünf-Pegel-NPC-Wechselrichters in zwei Drei-Pegel-Wellenformen derart, dass die zwei Drei-Pegel-Halbbrücken gleich belastet sind.

9. Das Verfahren gemäß einem der Ansprüche 1 bis 6, wobei das Mehrfach-Pegel-Wechselrichter-System (404, 405) einen Gleichtakt-Induktor (406) aufweist; wobei das Verfahren weiter den Schritt aufweist

- Bestimmen des Satzes von Pulsmustern und der assoziierten Musterstruktur aus dem Satz von möglichen Musterstrukturen (501, ..., 507), der den Minimumwert der Zielfunktion vorsieht unter der Einschränkung, dass die gesamten Voltsekunden, die den Gleichtakt-Induktor (406) magnetisieren, nicht einen vorgegebenen Gesamt-Voltsekunden-Wert übersteigen.

10. Ein Mehrfach-Pegel-Wechselrichter-System (404, 405) für einen Motorantrieb (407), das aufweist

- einen Satz von Schaltvorrichtungen (401, 402), die L Pegel von Ausgangspotentialen und einen Ausgangsstrom vorsehen; und
- eine Steuereinheit zum Setzen der Umschaltmomente des Satzes von Schaltvorrichtungen (401, 402);

wobei ein Pulsmuster, das die Umschaltmomente aufweist, basierend auf dem Verfahren gemäß einem der Ansprüche 1 bis 9 bestimmt wird.

11. Das Mehrfach-Pegel-Wechselrichter-System (404, 405) gemäß Anspruch 10, wobei die Steuereinheit eine Raumvektormodulation für einen unteren Bereich von Grundfrequenzen verwendet.

12. Ein Software-Programm, das ausgebildet ist zur Ausführung auf einem Prozessor und zum Durchführen der Verfahrensschritte gemäß einem der Ansprüche 1 bis 9, wenn auf einer Computervorrichtung ausgeführt.

13. Ein Speichermedium, das ein Software-Programm aufweist, das ausgebildet ist zur Ausführung auf einem Prozessor und zum Durchführen der Verfahrensschritte gemäß einem der Ansprüche 1 bis 9, wenn auf einer Computervorrichtung ausgeführt.

**Revendications**

1. Méthode de détermination d'un motif d'impulsion d'un système inverseur multi-niveaux (404, 405) destiné à un entraînement de moteur (407), dans laquelle :

- le système inverseur multi-niveaux (404, 405) comprend un jeu de dispositifs de commutation (401, 402) fournissant des niveaux L de tensions de sortie et un courant de sortie ;
- le motif d'impulsion comprend un jeu d'instants de commutation N, auxquels la commutation du système inverseur multi-niveaux (404, 405) vers un niveau adjacent de la tension de sortie se produit,

la méthode comprenant :

- la détermination d'un jeu de structures de motifs possibles (501, ..., 507) ;
- la fixation d'un jeu de fréquences fondamentales d'une forme d'onde du courant de sortie ; et
- pour une structure de motif (501) dans le jeu de structures de motifs possibles (501, ..., 507) et pour chaque fréquence fondamentale prise dans le jeu de fréquences fondamentales, la détermination (607) des instants de commutation N qui fournissent une valeur minimum relative d'une fonction objective qui est associée à la distorsion harmonique totale de la forme d'onde du courant de sortie, tout en tenant compte de la contrainte supplémentaire qu'une distance des instants de commutation correspondants (700) par rapport au jeu de motifs d'impulsion pour des fréquences fondamentales adjacentes par rapport au jeu de fréquences fondamentales n'excède pas une valeur prédéterminée, ce qui donne ainsi un jeu de motifs d'impulsion pour le jeu de fréquences fondamentales.

2. Méthode selon la revendication 1, comprenant en outre la fixation d'instants de commutation initiaux (606) et dans laquelle l'étape de fixation des instants de commutation initiaux comprend :

- la sélection des instants de commutation initiaux pour une fréquence fondamentale donnée comme étant les instants de commutation N qui fournissent une valeur minimum relative de la fonction objective pour une fréquence fondamentale adjacente prise dans le jeu des fréquences fondamentales.

**3.** Méthode selon l'une quelconque des revendications précédentes, dans laquelle :

- le motif d'impulsion définit une forme de quart d'onde (101) des tensions de sortie ; et
- la symétrie de quart d'onde et la symétrie de demi-onde (103, 104) des tensions de sortie sont introduites.

**4.** Méthode selon l'une quelconque des revendications précédentes, comprenant en outre les étapes de :

- détermination (608) d'une discontinuité entre des instants de commutation correspondants de motifs d'impulsion pris dans le jeu de motifs d'impulsion pour des fréquences fondamentales adjacentes ; et
- détermination (609) d'un nouveau motif d'impulsion comprenant de nouveaux instants de commutation pour au moins l'une des fréquences fondamentales adjacentes.

**5.** Méthode selon la revendication 4, dans laquelle l'étape de détermination (608) d'une discontinuité comprend le fait de déterminer si la distance entre des instants de commutation correspondants de motifs d'impulsion optimisés pour des fréquences fondamentales adjacentes dépasse la valeur prédéterminée.

**6.** Méthode selon les revendications 4 à 5, dans laquelle l'étape de détermination (609) d'un nouveau motif d'impulsion comprend

- la sélection des instants de commutation du motif d'impulsion pour une première des fréquences fondamentales adjacentes comme étant les instants de commutation initiaux ; et
- la détermination d'un nouveau motif d'impulsion pour une seconde des fréquences fondamentales adjacentes comprenant de nouveaux instants de commutation qui fournissent une valeur minimum relative de la fonction objective.

**7.** Méthode selon l'une quelconque des revendications précédentes, comprenant en outre les étapes de :

- détermination du jeu de motifs d'impulsion qui fournit une valeur minimum relative de la fonction objective pour chaque structure de motif dans le jeu de structures de motif possibles (501, ..., 507) ; et
- sélection du jeu de motifs d'impulsion et de leur structure de motif associée qui fournit la valeur minimum de la fonction objective.

**8.** Méthode selon l'une quelconque des revendications précédentes, dans laquelle le système inverseur multi-niveaux (404, 405) est un inverseur sous contrainte à point neutre à cinq niveaux avec L = 5 comprenant deux demi-ponts à trois niveaux ; la méthode comprenant en outre l'étape de

- division de la forme d'onde de la tension de sortie de l'inverseur sous contrainte à point neutre à cinq niveaux en deux formes d'onde à trois niveaux de telle sorte que les deux demi-ponts à trois niveaux soient chargés de manière égale.

**9.** Méthode selon l'une quelconque des revendications 1 à 6, dans laquelle le système inverseur multi-niveaux (404, 405) comprend un inducteur en mode commun (406) ; la méthode comprenant en outre l'étape de

- détermination du jeu de motifs d'impulsion et de la structure de motif associée prise dans le jeu de structures de motifs possibles (501, ..., 507) qui fournit la valeur minimum de la fonction objective, étant donné la contrainte que les volt-seconde totaux qui aimantent l'inducteur en mode commun (406) ne dépassent pas une valeur volt-seconde totale prédéterminée.

**10.** Système inverseur multi-niveaux (404, 405) destiné à un entraînement de moteur (407) comprenant

- un jeu de dispositifs de commutation (401, 402) fournissant les niveaux L des tensions de sortie et un courant de sortie ; et
- une unité de commande destinée à fixer les instants de commutation du jeu des dispositifs de commutation (401, 402) ;

dans laquelle un motif d'impulsion comprenant les instants de commutation est déterminé en se fondant sur la méthode selon l'une quelconque des revendications 1 à 9.

**11.** Système inverseur multi-niveaux (404, 405) selon la revendication 10, dans lequel l'unité de commande utilise une modulation de vecteur spatial pour une gamme inférieure de fréquences fondamentales.

**12.** Programme logiciel conçu pour être exécuté sur un processeur et pour mettre en oeuvre les étapes de la méthode selon l'une quelconque des revendications 1 à 9, lorsqu'elles sont effectuées sur un dispositif informatique.

**13.** Support de mémoire comprenant un programme logiciel conçu pour être exécuté sur un processeur et pour mettre en oeuvre les étapes de la méthode selon l'une quelconque des revendications 1 à 9, lorsqu'elles sont effectuées sur un dispositif informatique.

**FIG. 1**

**Fig. 2**

**Fig. 3**

**Fig. 4a**

**Fig. 4b**

Fig. 5

**601**

N

**602**

$$\frac{f_s}{(N+1)\cdot f_1} \leq m \leq \frac{f_s}{N\cdot f_1}$$

**603**

Number of possible structures = $N_{st}$
$N_{st}$ = 3 for $N$ = 4; 63 for $N$ = 13

1    2    3    ..........................    $N_{st}$

**606**
Intialization
(Generating initial values of angles)·

**607**
Optimization
(Calculating optimal values of angles)

**608**
Are the angles continuous?    No → 

**609**
Post-optimization
(Re-calculation of angles to avoid discontinuities)

Yes

$a_{il}$        $a_{il}$

**610**    $d_1, a_{il}$

Initialization, Optimization, Post-optimization
(same as $st$ = 1, given on left)

$d_1, a_{il}$    ..........................    $d_{Nst}, a_{iNst}$

**604**
Compare all $d_{Nst}$ values and select the competitive structures (which have nearly same $d$)

**611**
Common dc link or isolated dc link topology?    Common dc link topology **612**

Compute total volt-sec ($Volt\text{-}Sec\_T$) for all competitive structures

Isolated dc link topology

**605**
$a_i$ corresponds to $d_{min}$

$a_i$ corresponds to $Volt\text{-}Sec\_T < 7u_d/6$ and relative low $d$    **613**

**Fig. 6**

**Fig. 7**

**Fig. 8**

**Fig. 9**

**Fig. 10**

**Fig. 11**

**Fig. 12**

**Fig. 13**

EP 2 312 739 B1

Fig. 14

28

Fig. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HOLTZ, J.** Pulsewidth Modulation - A survey. *IEEE, Proceedings of the annual power electronics specialists conference,* 29 June 1992, 11-18